# EUROPEAN PATENT SPECIFICATION

(11) **EP 4 179 498 B1**
(45) Date of publication and mention of the grant of the patent: **05.03.2025**
(21) Application number: 21729633.4
(22) Date of filing: 30.04.2021
(51) Int. Cl.: G06T 7/00, G06T 7/11

(54) **A COMPUTER-IMPLEMENTED METHOD FOR EXECUTING SEMANTIC SEGMENTATION OF RGB DIGITAL IMAGES**
COMPUTERIMPLEMENTIERTES VERFAHREN ZUR AUSFÜHRUNG EINER SEMANTISCHEN SEGMENTIERUNG VON DIGITALEN RGB-BILDERN
PROCÉDÉ MIS EN OEUVRE PAR ORDINATEUR POUR EXÉCUTER UNE SEGMENTATION SÉMANTIQUE D'IMAGES NUMÉRIQUES RVB

(30) Priority: 09.07.2020 IT 202000016657
(43) Date of publication of application: 17.05.2023
(73) Proprietor: Nidek Co., Ltd., Gamagori-Aichi, 443-0038 (JP)
(72) Inventor: PERONI, Andrea, 30173 Venezia (IT); PAVIOTTI, Anna, 35122 Padova (IT); TRUCCO, Emanuele, Edinburgh, Scotland EH9 1HN (GB); CAMPIGOTTO, Mauro, 35122 Camposampiero (PD) (IT)
(74) Representative: Marchioro, Paolo
(86) International application number: PCT/IB2021/053607
(87) International publication number: WO 2022/008986

(56) References cited:
- XUE DI-XIU ET AL: "Fully convolutional networks with double-label for esophageal cancer image segmentation by self-transfer learning", PROCEEDINGS OF SPIE; [PROCEEDINGS OF SPIE ISSN 0277-786X VOLUME 10524], SPIE, US, vol. 10420, 21 July 2017 (2017-07-21), pages 104202D - 104202D, XP060092290, ISBN: 978-1-5106-1533-5, DOI: 10.1117/12.2282000
- SERGEY ZAGORUYKO ET AL: "Wide Residual Networks", ARXIV.ORG, CORNELL UNIVERSITY LIBRARY, 201 OLIN LIBRARY CORNELL UNIVERSITY ITHACA, NY 14853, 23 May 2016 (2016-05-23), XP080703031
- SIMON J\'EGOU ET AL: "The One Hundred Layers Tiramisu: Fully Convolutional DenseNets for Semantic Segmentation", ARXIV.ORG, CORNELL UNIVERSITY LIBRARY, 201 OLIN LIBRARY CORNELL UNIVERSITY ITHACA, NY 14853, 28 November 2016 (2016-11-28), XP081364403
- EVAN SHELHAMER ET AL: "Fully Convolutional Networks for Semantic Segmentation", ARXIV.ORG, CORNELL UNIVERSITY LIBRARY, 201 OLIN LIBRARY CORNELL UNIVERSITY ITHACA, NY 14853, 20 May 2016 (2016-05-20), XP080702391
- "Lecture Notes in Computer Science", vol. 9351, 1 January 2015, SPRINGER BERLIN HEIDELBERG, Berlin Germany, ISBN: 978-3-030-67069-6, ISSN: 0302-9743, article OLAF RONNEBERGER ET AL: "U-Net: Convolutional Networks for Biomedical Image Segmentation : 18th International Conference, Munich, Germany, October 5-9, 2015, Proceedings, Part III", pages: 234 - 241, XP055746424, DOI: 10.1007/978-3-319-24574-4_28

## Description

The invention relates to a computer-implemented method for executing semantic segmentation of RGB digital gonioscopic images representing the irido-corneal interface layers, also known as images of an irido-corneal angle, using a deep learning neural network, and in particular a computer-implemented method that provides a training step of such a deep learning neural network and, furthermore, a per-pixel classification step executed by said trained deep learning neural network.

Moreover, the invention concerns a computer system adapted to execute such a deep learning semantic segmentation of RGB digital gonioscopic images representing the irido-corneal interface layers and a computer program product configured, when run in the memory of a computer, for executing said segmentation.

It is widely known that glaucoma is a leading cause of irreversible blindness and currently affects more than 70 million people worldwide. The chances of developing this pathology may be affected by the reduction in efficiency and/or localized or extended occlusions of a specialized eye structure, the trabecular meshwork, also known with the acronym "TM", that bounds the periphery of the iris along its interface with the cornea in the eye anterior chamber.

The TM normally regulates the intra-ocular pressure by draining the aqueous humour; if the drainage is hampered, there may be a rise in intra-ocular fluid pressure, which is a condition highly correlated to an increased risk of developing glaucoma.

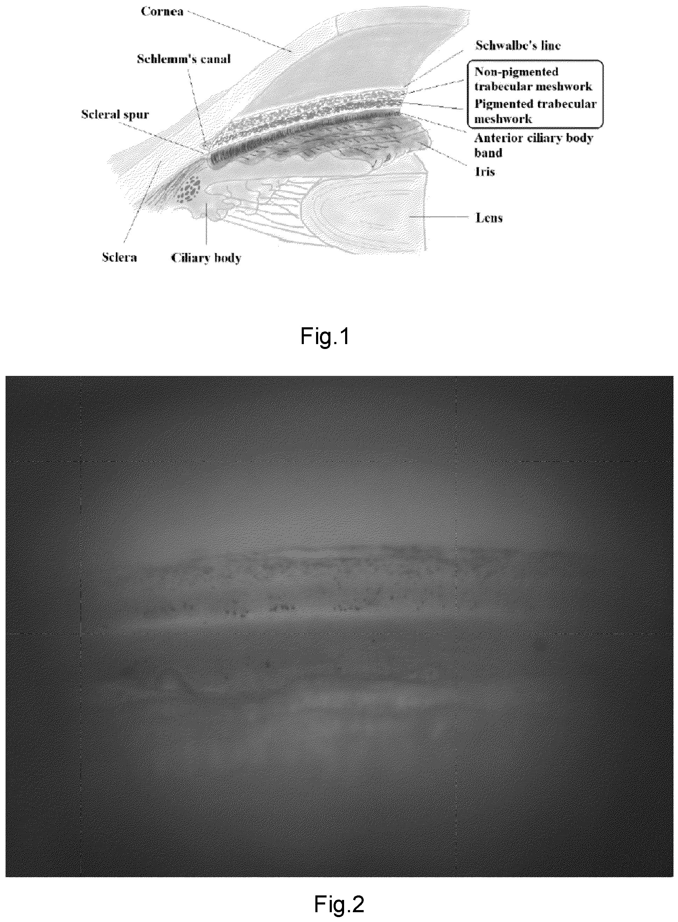

In particular, the trabecular meshwork separates the iris from the sclera and is located inside the irido-corneal angle. To be precise, if an irido-corneal angle image, also called as "gonioscopic image", is considered (assuming that the angle is open), the following anatomical elements, subsequently referred to as "layers", are found in the following sequence along the angle surface: iris, ciliary body, scleral spur, pigmented trabecular meshwork, non-pigmented trabecular meshwork, Schwalbe's line, cornea. A representation of a section of the 360° interface between iris and cornea is shown in Fig. 1 and an example of a RGB digital gonioscopic image is shown in Fig. 2.

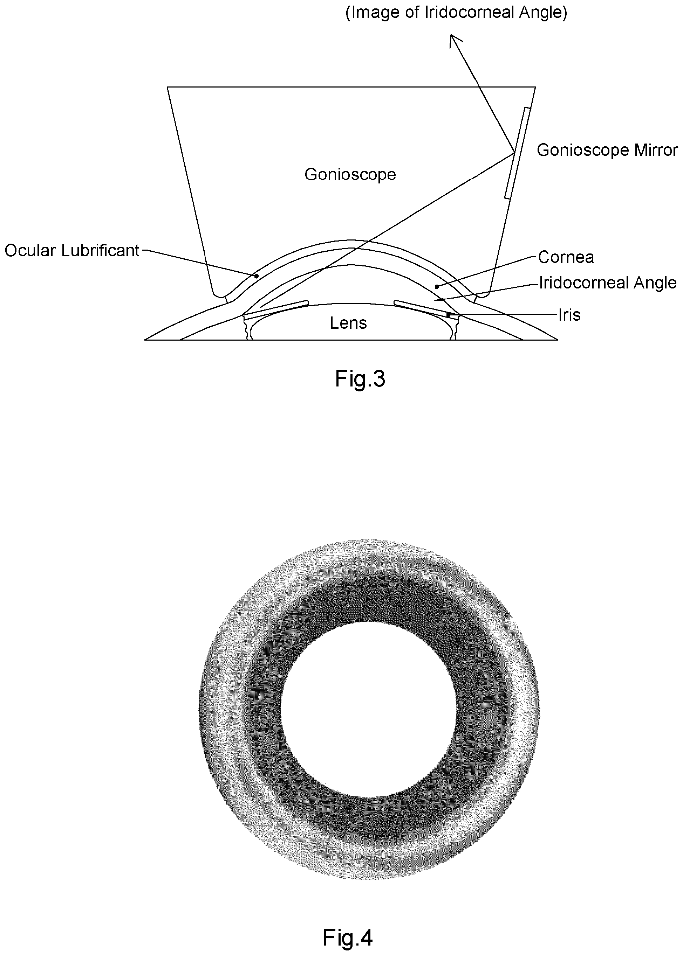

The current gold-standard examination, called gonioscopy, allows the clinician to inspect the structures located at the irido-corneal interface by manually holding a multi-faceted mirror in contact with the patient's eye. The visibility and conformation of these structures is of fundamental importance for assessing both risks and aetiology of the disease. The mirror is necessary as the interface lays well off the direct line of sight, as can be seen in Fig. 3. However, this system presents several limitations: it takes time and requires substantial expertise with a long and steep learning curve.

In particular, the diagnosis through such a manual examination is subjective and many times different clinicians can give some conflicting opinions. Furthermore, disadvantageously, the acquisition of images for the follow-up (e.g. detection of changes over time, clinical trials) is problematic.

It is equally well known that nowadays some ophthalmic devices, i.e. the NIDEK GS-1 ophthalmic device, have been developed in order to perform semi-automatic gonioscopy and to store a plurality of RGB digital gonioscopic images of the irido-corneal interface layers, enabling a complete (360°) visualization, as represented in Fig. 4.

As said above, each one of such RGB digital gonioscopic images represents the irido-corneal interface layers, also known as irido-corneal angle. In particular, it is worth specifying that each RGB digital gonioscopic image is a real color 2D representation of 3D sector of the irido-corneal interface layers, or of the irido-corneal angle, in contrast to the representation of the retinal layers in OCT images, that, by definition, represent a cross-sectional image of ocular tissues obtained by the optical coherence tomography technique. However, up to now, disadvantageously, the algorithms utilized to process such kind of images do not perform semantic segmentation of the interface layers, that represent an important and primary source of information for assessing the grade of angle closure, i.e. the extent of TM occlusion.

Hence, there is a need in the art of computer systems that are adapted to accurately segment anatomical layers in RGB digital gonioscopic images. In particular, there is a need in the art of computer systems that can accurately distinguish each layer of such irido-corneal interface layers.

Document "Fully convolutional networks with double-label for esophageal cancer image segmentation by self-transfer learning" to Xue Di-Xiu et al. tackles the "incomplete labelling" problem in a context of neural networks based on biomedical image segmentation. The problem is addressed by co-optimizing the encoder using both semantic and ROI labels over training.

The present invention intends to overcome the drawbacks and the limitations listed above.

For this purpose it is a first object of the invention to provide a computer-implemented method for the automatic analysis of RGB digital gonioscopic images.

In particular, it is an object of the invention to provide a computer-implemented method configured to execute an automatic semantic segmentation of the irido-corneal interface layers images in such a way to sophisticate and automate the current reference examination, called gonioscopy, for evaluating the risk of angle closure, a condition that may cause an increase in intra-ocular pressure and the risks of developing glaucoma. If the pathology has already developed, assessing the conformation of the angle may support its categorization and provide hints on what treatment to choose.

The stated objects are achieved with the realization of a computer-implemented method according to claim 1.

Further features of the computer-implemented method of the invention are described in the dependent claims.

Moreover, such objects are achieved with a computer system according to claim 12 and with a computer program product according to claim 13.

The aforesaid objects, together with the advantages which will be mentioned hereinafter, will be highlighted during the description of a preferred embodiment of the invention, given by way of a non-limiting example with reference to the attached drawing tables, where:
- Fig. 1 shows a representation of a 3D section of the 360° interface between iris and cornea;
- Fig. 2 represents an example of a 2D RGB digital gonioscopic image representing the irido-corneal interface layers;
- Fig. 3 represents a schematic view of the mirrored prism that allows to inspect the irido-corneal interface;
- Fig. 4 represents an example of 360° visualization of the irido-corneal interface layers of an eye acquired by means of an ophthalmic device;
- Fig. 5 shows an overview of the approach adopted for generating the semantic segmentation of irido-corneal angle layers in digital gonioscopic images by the computer-implemented method of the invention;
- Fig. 6 reports the deep learning neural network architecture of the computer-implemented method of the invention;
- Fig. 7 shows the structure of the constituent blocks of the architecture of Fig. 6 in details;
- Fig. 8 reports an example of neural network outputs: the semantic segmentation map and its uncertainty map, both computed through a Monte Carlo dropout approach according to claim 12, to be compared with the original image and ground truth;
- Fig. 9 reports the steps for generating the ROI likelihood maps used to train the ROI localization decoder.

As visible in Fig. 2, in a RGB digital gonioscopic image representing the irido-corneal interface layers of an eye, also called irido-corneal angle, each of the various anatomical elements (hereinafter also referred to as "layers") of the irido-corneal angle (i.e. iris, ciliary body, scleral spur, pigmented trabecular meshwork, non-pigmented trabecular meshwork, Schwalbe's line, cornea) forms a stripe in this image; however, it may happen that one or more of these anatomical elements (layers) cannot be seen in an image, due to a certain degree of angle closure; each stripe may be straight or slightly curved, typically as an arc of a circle. As can be noticed from Fig. 2, lightness and contrast are not uniform across the area of the image; in particular, the central portion of the image is lighter and sharper while the peripheral portion of the image is darker and blurry.

Furthermore, such RGB digital gonioscopic images are characterized by a high degree of intra-variability and the inter-similarity of the layers characteristics. As said before, such RGB digital gonioscopic images are acquired by means of semi-automatic ophthalmic devices, as for example the NIDEK GS-1 ophthalmic device, that permits to define a complete (360°) visualization of the irido-corneal interface layers of an eye, as shown in Fig. 4.

In this regard, it is to be noted that each of said RGB digital gonioscopic images is associated also to the information concerning the precise acquisition direction. Alternatively, the acquisition direction may be roughly estimated from the image itself.

The computer-implemented method of the invention is configured for executing a deep learning-based semantic segmentation of RGB digital gonioscopic images representing the irido-corneal interface layers.

Advantageously, such approach permits to provide immediate information about location, extension and integrity of the interface structures (layers) in order to aid clinical decisions and making the patient examination more effective and objective.

Regarding the type of RGB digital images processed by the computer-implemented method of the invention, by definition, they are color images, for each pixel of which the value of each channel R-G-B is defined.

Preferably, for each channel of a pixel there is reserved a byte; for this reason, each R-G-B channel is able to assume a value in the range of [0-255].

However, it is not excluded that the original color digital images representing the irido-corneal interface layers can be defined with a different color model or that the digital space reserved for each channel of a pixel could be different with respect to a byte.

Regarding the computer-implemented method of the invention, it provides a training step that, in turn, comprises a series of phases described below.

The first phase of the training step consists of receiving a training set comprising a plurality of said RGB digital gonioscopic images and of executing a data pre-processing step on said RGB digital gonioscopic images.

With regards to the training set, according to the preferred embodiment of the invention, it comprises between 40% and 80%, preferably it comprises about 50%, of a first group of RGB digital gonioscopic images representing open angle/healthy cases.

More precisely, in this first group, about 50% of the RGB digital gonioscopic images belongs to a first sub-group representing dark iris and about the remaining 50% of the RGB digital gonioscopic images of such first group belong to a second sub-group representing light iris.

Furthermore, preferably, each one of said first sub-group and said second sub-group comprises about 50% of its images representing highly pigmented trabecular meshwork and about 50% of its images representing slightly pigmented trabecular meshwork.

The training set, according to the preferred embodiment of the invention, comprises between 20% and 60%, preferably it comprises about 50%, of a second group of RGB digital gonioscopic images representing pathological images, wherein between 30% and 50%, preferably about 40%, of said RGB digital gonioscopic images belonging to the second group represents closed angles, between 30% and 50%, preferably about 40%, represents synechiae and the remaining images of such second group of RGB digital gonioscopic images represent images where implants or post-surgical intervention injuries are present.

Advantageously, although these criteria don't necessarily describe the statistical distribution of eye features in the real population (e.g. the distribution of light and dark irises), the Inventors have been able to experimentally verify that this composition of the images making up the training set allows creating a model more robust to feature-based bias and capable of good generalization when it is used to process unknown data, in order to identify and classify the features of the irido-corneal interface layers.

It is not excluded, however, that according to alternative embodiments of the invention the composition of the images making up the training set could be different with respect to the preferable composition described above.

As regards the size of the training set, that is the number of images belonging to said training set, according to the invention and considering the number of segmented angle layers and the possible pathological conditions affecting the appearance of the images, it is comprised between 200 and 3000, preferably between 1000 and 3000, more preferably it is chosen around 3000 images. Once received the training set, as said above, the computer-implemented method of the invention is configured to execute a data pre-processing step comprising a data range scaling to the [0, 1] values range of each channel R-G-B of each pixel of said RGB digital gonioscopic images, in such a way as to opportunely adapting the data as an input of a deep learning neural network, as will be specifically described below.

According to the preferred embodiment of the invention the pre-processing step also includes the rotation of said RGB digital gonioscopic images in such a way that each one of said RGB digital gonioscopic images shows the angle layers with the same orientation with respect to the other RGB digital gonioscopic images, preferably but not necessarily each one of said RGB digital gonioscopic images shows iris layer at the bottom and the cornea layer at the top of the image.

Moreover, it is not excluded that, according to alternative embodiments of the invention, the pre-processing step could also provide a global or local image contrast enhancement phase, e.g. using histogram equalization or CLAHE (contrast limited adaptive histogram equalization).

Preferably but not necessarily, such an optional contrast enhancement phase could require to convert each RGB digital gonioscopic image to a cylindrical color space, more preferably to HSL color space, applying the contrast enhancement algorithm to the one of the channels of the cylindrical color space, preferably the L channel, and converting said enhanced image back to RGB color space.

The aim of the pre-processing step is to ease the segmentation problem as much as possible by amplifying the differences between characterizing image features (e.g. layer-specific features) and reducing those between non-relevant ones (e.g. sector orientation).

As regards the data rotation phase, as said before, it is possible because each RGB digital gonioscopic image is associated also with the information concerning the precise acquisition direction. Advantageously, this allows to relax about the necessity for invariance to rotations and let the network focus on more relevant features.

Regarding the optional contrast enhancement phase, advantageously, it consists in increasing images contrast to make tissue-specific features more easily detectable by the network.

The pre-processing step could provide also a sub-sampling operation of the original images along width and height.

In this regards, according to the preferred embodiment of the invention, the images input to the network are 320×240×3 (width/height/number of color channels) pixel matrices encoded in the RGB color space, where each color channel is in the [0, 1] range, according to the pre-processing step.

However, it is not excluded that for alternative embodiments of the invention the size of the images inputted to the network could be different from 320x240x3.

According to the preferred embodiment of the invention, the data pre-processing step also comprises, after said data range scaling operation, a random data augmentation phase, comprising, in combination or alternatively, for each of said RGB digital gonioscopic image, a small rotation about an angle comprised between -45 and 45 degrees, a vertical shifting between -50% and 50% of the height of the image and/or a horizontal shifting between -50% and 50% of the width, a zoom with magnification between -0.3 and 0.3, a shear between -20 to 20 degrees along each axis, a horizontal flip, a uniform and/or non-uniform (e.g. sinusoidal) image lightness variation, a uniform and/or non-uniform sharpness variation and/or a noise injection.

Augmentation of training set is a commonly adopted strategy to artificially generate multiple different representations of training data and, thus, make the model more robust to certain kind of variations and capable of better generalization.

The computer-implemented method of the invention provides that at the beginning of each training epoch the RGB digital gonioscopic images belonging to the training set are randomly split into batches, wherein each batch comprises at least 1 image and up to 10% of training set images, and wherein each batch is augmented before being forwarded to the network for training.

Data augmentation introduces small transformations to simulate the effect of acquisition device misalignments. Images are randomly split into batches before a new training epoch starts. Every batch of images is transformed before being input to the neural network, so that, every epoch, the network processes a unique slightly different version of each of the original training set images. This improves generalization of the information learnt.

According to the preferred embodiment of the invention, the pre-processing step is implemented by means of traditional algorithms.

However, it is not excluded that, according to an alternative embodiment of the invention, such a pre-processing step, in particular the augmentation phase, could be implemented by a further deep learning neural network opportunely trained.

The training step comprises, furthermore, another phase of receiving, for each of said RGB digital gonioscopic images of the training set, a number of data maps equal to the number of target anatomical layers considered, each data map representing the pixels of each RGB digital gonioscopic image labeled as appertaining to a specific layer of said layers.

In other words, such data maps represent for each RGB digital gonioscopic image of the training set the reliable ground truth used as reference in the loss function to opportunely train the model of the neural network, as it will be specifically defined below.

Such data maps are obtained by manual annotations carried out by expert ophthalmologists on the RGB digital gonioscopic images of the training set. In particular, the annotations consist of several, disjoint polygons, each highlighting the region of each RGB digital gonioscopic image the ophthalmologists were enough confident to identify as a target layer. This means that un-annotated regions may semantically belong to a target layer, but they could not be annotated confidently. Each polygon is labeled with the corresponding layer name.

After that, by processing each one of such annotated RGB digital gonioscopic images, one data map for each layer is obtained, wherein the pixels considered appertaining to said layer are labeled with the label coupled to said specific layer.

According to the preferred embodiment of the invention, each RGB digital gonioscopic image is paired with five binary data maps, representing the regions (the set of pixels) covered by the layers considered, if visible, that are: the iris root, the ciliary body band, the scleral spur, the trabecular meshwork (both pigmented and non-pigmented regions) and the cornea. However, according to alternative embodiments of the invention it is not excluded that one or more data maps may be merged together or, conversely, further split to account for different kind of anatomical information and/or provide segmentations with different semantics (e.g. different clinical focus and/or support for specific applications).

It is worth specifying that such an approach provides to label only and exclusively the pixels considered appertaining to one of such layers. Therefore, the pixels of each RGB digital gonioscopic image not annotated, and therefore not considered appertaining to any of the layers of the irido-corneal angle or not identifiable with enough confidence, are defined as unlabeled (or un-annotated) pixels.

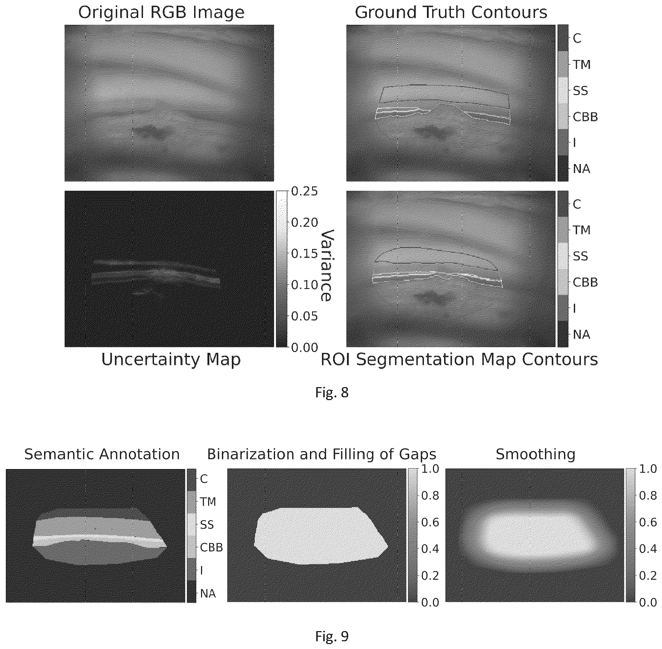

The preferred embodiment of the invention also provides a step to generate an additional data map that stores an estimate of the distribution of local image informativeness as a representation of the area the clinicians annotated with confidence, hereafter called region of interest (ROI) likelihood map. It is generated from layer annotations by assigning value 1 to all annotated image regions and 0 to the un-annotated area; small gaps within the considered area are filled and the resulting connected region is smoothed to simulate the slow variation of images feature that define informativeness, preferably lightness and sharpness. The steps for generating the ROI likelihood map is shown in Fig. 9.

Evidently, according to the preferred embodiment of the invention, all the geometric transformations executed on each one of the RGB digital gonioscopic images belonging to the training set during the pre-processing step (e.g. the data rotation phase and the geometric augmentation phase) and/or the sub-sampling phase, are also executed on all the corresponding data maps. None of the photometric transformations (e.g. the optional contrast enhancement phase and the photometric augmentation phase) are performed on the data maps.

Once the training set images and the corresponding data maps are opportunely pre-processed, the training step of the computer-implemented method of the invention comprises a further phase of providing each scaled RGB digital gonioscopic image of the training set and the associated data maps as the input of a deep neural network (DNN), comprising an encoder and two decoders, each comprising a plurality of levels.

It is worth highlighting that the entire RGB digital gonioscopic image is put to the input of the deep neural network instead of multiple image patches. This is necessary to deal with the intra-variability and the inter-similarity of layers features.

In fact, in the current application, using separate image patches, and therefore considering local image information, it would not be guaranteed an effective classification of the layers.

Conversely, considering all the available information about the context and therefore using entire images as network inputs, the output accuracy of the classification is increased.

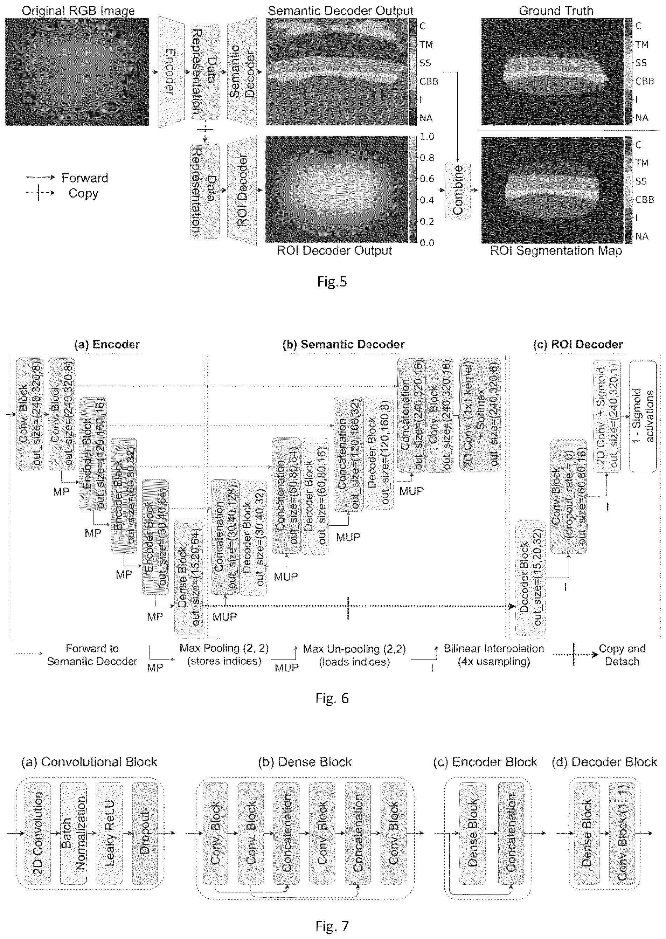

The proposed approach is graphically depicted in Fig. 5. The deep learning architecture simultaneously performs two complementary tasks:
1. providing a semantic segmentation map that maximizes per-pixel classification accuracy within the region annotated by the expert clinicians, as the output of the semantic decoder;
2. locating a ROI in each image by adaptively estimating local informativeness (lightness and sharpness distribution), as the output of the ROI decoder.

By combining these two outputs, the preferred embodiment of the invention can provide a precise and easily interpretable semantic segmentation of anatomical layers in digital gonioscopic images over the most informative, and useful from a clinical point of view, region of interest.

Fig. 6 provides a detailed description of the DNN architecture.

The overall DNN architecture of the preferred embodiment of the invention comprises three main components:
- an encoder (Fig. 6 a) that generates the representation of input data features;
- a semantic decoder (Fig. 6 b) that performs the semantic segmentation of target layers, maximizing the per-pixel classification accuracy within the annotated region of each RGB digital gonioscopic images;
- a ROI decoder that estimates local image informativeness (lightness and contrast) and returns the most informative, and clinically relevant, region of each RGB digital gonioscopic image.

Fig. 7 reports a detailed graphic description of the processing blocks comprised in the preferred embodiment of the invention, they are:
a) the convolutional block: the basic processing block of the proposed DNN, that comprises a sequence of a 2D convolutional layer, batch normalization, activation (preferably a leaky ReLU activation) and a dropout layer. In particular, batch normalization normalizes feature maps and, thus, ensures better overall performances of the network. 2D convolutional filters are used to process the feature maps coming from previous layers and increase the abstraction of features representation. The preferred kernel size of convolutional kernels is 3×3 pixels, except where indicated differently. Dropout layers are used to randomly switch off DNN convolutions, reducing in this way overfitting during training. They are also used over the classification step to implement a Monte Carlo dropout approach, as will be described more in detail below;
b) the dense block: comprising a sequence of, preferably, four convolutional blocks with intermediate concatenations of pairs of convolutional block outputs. Advantageously, such short connections between the convolutional blocks of the same dense block bring efficient reuse of information that improves the abstraction of intermediate data representations and an accelerated convergence of the training process since they ease the backpropagation of the weights updating signal and limit the problem of vanishing gradients;
c) the encoder block: comprising a dense block and a concatenation between its inputs and outputs;
d) the decoder block: comprising a sequence of a dense block and a 2D convolutional block with 1×1 convolutional kernels to perform outputs dimensionality reduction.

However, it is not excluded that for alternative embodiments of the invention the structure of one or more constituent network blocks could be different from that described above for the preferred embodiment of the invention. According to the preferred embodiment of the invention, the semantic decoder of the DNN terminates with a 2D convolution with 1×1 pixel kernel size, configured to reduce the number of output classes in order to match the number of said considered layers plus the un-annotated region, and with an activation function, preferably a softmax activation function, to predict the probability that each pixel belongs to one of said layers.

Preferably, the combination of encoder and semantic decoder of the DNN architecture is a fully-convolutional, symmetric, sub-network of the entire DNN architecture.

More precisely, as depicted in Fig. 6, the combination of encoder and semantic decoder trained and used by the computer-implemented method of the invention is configured in such a way that:
- each intermediate level is provided with an encoder block along the encoding path and a decoder block along the decoding path;
- each of the encoding means between a first level and the second level of each couple of adjacent levels is configured for downsampling the output feature maps of the first level and each of the semantic decoding means between said second level and said first level of each couple of adjacent levels is configured for upsampling the output feature maps of said second level;
- direct connections configured to forward the output feature maps of each level along the encoding path with the same level along the semantic decoding path, wherein said output feature maps are merged with the upsampled output feature maps of the preceding level along the semantic decoding path before being processed by said same level along the semantic decoding path.

With regards to the encoding means, each of them comprises a max pooling (preferably with size 2×2 pixels) layer, with regards to the semantic decoding means, each of them comprises a max unpooling (preferably with size 2x2 pixels) layer.

According to the preferred embodiment of the invention, the ROI decoder receives a hard copy of data representation as input and processes it through a decoder block, a convolutional block and a 2D convolution followed by a sigmoid activation function.

Sigmoid activations are subtracted from an all-one matrix in order to output the ROI (the well-lit and sharp image area). This implicitly means that the ROI decoder filters are actually trained to identify the dark and blurred periphery of the images. This approach is advantageous, since dark and blurred pixels are highly correlated.

Differently from the semantic decoder structure, ROI decoder upsamplings are, preferably, bilinear interpolations.

It is not excluded that, according to alternative embodiments of the invention, encoder, semantic decoder and ROI decoder structures may change, e.g. by adding or removing intermediate processing blocks to account for variations in inputs size.

The training step of the computer-implemented method of the invention provides to process each of the scaled RGB digital gonioscopic images belonging to the training set through said DNN. According to the preferred embodiment of the invention, the DNN is simultaneously trained through two different optimization processes, one involving the sub-network comprising the encoder and the semantic decoder and the other one involving only the ROI decoder. The sequence of encoder and semantic decoder is trained end-to-end through a weighted loss function, preferably a weighted categorical cross-entropy loss function, with all class weights referring to considered layers equal to 1 and the weight referring to the un-annotated region equal to 0.

Assigning weight 0 to un-annotated pixels makes the sub-network comprising the combination of encoder and semantic decoder insensitive to unlabeled areas during the training step for each image of the training set. It means that the model is trained using only the labeled pixels for each image, that is considering only the regions annotated by the experts.

Advantageously, as said before, this strategy considerably improves the accuracy of the network outputs within the annotated region, since the unlabeled pixels contain some real background information, such as all the whole region beyond the cornea, but they also store a lot of features that are correlated to those of the layers, due to the focus variation and to the vignetting in the acquired images.

The ROI localization decoder is trained independently through the minimization of another loss function, preferably a mean squared error loss function, using the artificial ROI likelihood maps as references. The ROI localization decoder operates on a hard copy of data representation output by the encoder; its training does not affect either the encoder or the semantic decoder since the backpropagation signal cannot reach them.

However, it is not excluded that according to different embodiments of the invention with respect to the preferred embodiment, the computer-implemented method could comprise different types of loss functions or that the loss function weights could vary, e.g. to account for the variability in targets size (smaller targets being assigned a larger weight).

The computer-implemented method of the invention comprises also a pixel-wise classification step.

Such a classification step, in turn, comprises the phase of receiving one or more RGB digital gonioscopic images and executing the data pre-processing step on said RGB digital gonioscopic images, wherein such a data pre-processing step provides the same phases executed during the training step and previously described in depth, except the data augmentation phase. Furthermore, the classification step comprises the operation of providing the (scaled and pre-processed) RGB digital gonioscopic image as the input of the DNN after the same DNN has been trained through the training step. Subsequently, the trained DNN, according to the computer-implemented method of the invention, is configured to process each RGB digital gonioscopic image and after that the classification step provides the operation of receiving pixel activations from the activation functions of the trained DNN (activations from both the semantic decoder and the ROI decoder) for the pixels belonging to said RGB digital gonioscopic image, classifying the pixels based on such pixel activations and, preferably, determining a pixel representation of one or more of the layers based on the classified pixels.

Moreover, according to the preferred embodiment of the invention, the inclusion of multiple dropout layers in the DNN architecture allows to adopt a Monte Carlo dropout approach during the classification step. By exploiting dropout properties, the same input RGB digital gonioscopic image can be repeatedly processed by the DNN, each time leading to slightly different activations from the semantic decoder and the ROI decoder.

Multiple semantic and ROI activation maps can be used to generate a more robust and stable output. In particular the semantic activations can be averaged before extracting the most likely class value for each pixel and the same can be done for the ROI activations to locate a more reliable region of interest.

Preferably, but not limited to, multiple semantic activations can be further used to measure the semantic activations variability through the computation of class activations variance. Activation values variability can be used to represent DNN uncertainty at processing local image features and can be a valuable support for the interpretation of semantic segmentation outputs (Fig. 8).

As mentioned above, a computer system adapted to execute a deep learning semantic segmentation of RGB digital gonioscopic images representing the irido-corneal interface layers is also part of the invention.

In particular, the computer system of the invention comprises a computer-readable storage medium having a computer-readable program code embodied therewith and a processor, preferably a microprocessor, coupled to the computer-readable storage medium.

According to the invention, in response to executing the computer-readable program code, the processor is configured to perform the training step and/or the classification step as defined above.

Moreover, a computer program product comprising software code portions is also part of the invention.

More precisely, such software code portions are configured, when run in the memory of a computer, for executing the training step and/or the classification step as defined above.

Therefore, on the basis of what has been said, the computer-implemented method, the computer system and the computer program product of the invention achieve all the predetermined purposes.

In particular, the object of providing a computer-implemented method for the automatic analysis of RGB digital gonioscopic images is achieved.

More precisely, it is achieved the object of providing a computer-implemented method configured to execute an automatic semantic segmentation of the irido-corneal interface layers images in such a way as to sophisticate and automate the current reference examination, called gonioscopy, for evaluating the risk of angle closure, a condition that may cause the increase in intra-ocular pressure and the risks of developing glaucoma. If the pathology has already developed, assessing the aperture of the angle may support its categorization and provide hints on what treatment to choose.

## Claims

1. Computer-implemented method for executing a deep learning semantic segmentation of RGB digital gonioscopic images representing the irido-corneal interface layers, the method providing a training step comprising the following phases:
- receiving a training set comprising a plurality of said RGB digital gonioscopic images and executing a data pre-processing step on said RGB digital gonioscopic images, said data pre-processing step comprising at least a data range scaling to the [0, 1] values range of each channel R-G-B of each pixel of said RGB digital gonioscopic images;
- receiving, for each of said RGB digital gonioscopic images of said training set, a number of data maps equal to the number of said layers, each data map representing the pixels of each RGB digital gonioscopic image labeled as appertaining to one of said layers, the pixels of said RGB digital gonioscopic image not considered appertaining to any of said layers being defined as unlabeled pixels appertaining to an un-annotated region;
- generating an additional data map representing an estimation of local image informativeness by processing the layer data maps;
- providing each scaled RGB digital gonioscopic image of the training set and the associated data maps as the input of a deep neural network (DNN) comprising an encoder and two decoders, comprising a plurality of levels, said DNN being configured to provide both pixel-wise semantic activation maps to perform semantic segmentation of said layers, through a first semantic decoder, and a pixel-wise activation map to locate a region of interest (ROI) in said training images by evaluating local image informativeness, preferably lightness and sharpness, through a second ROI decoder, said second ROI decoder operating on a hard copy of data representation output by said encoder;
- processing each of said scaled RGB digital gonioscopic images through said DNN and training said DNN through a simultaneous and independent two-loss minimization process:
- a first weighted loss for optimizing the weights of the sub-network made up by the sequence of encoder and semantic decoder by assigning each of the pixels in said RGB digital gonioscopic images either a weight different from 0, if appertaining to one of said layers or a weight equal to 0, if appertaining to the un-annotated region, making said sub-network insensitive to un-annotated region during said training step for each RGB digital gonioscopic images of the training set;
- a second loss to optimize the weights only of the ROI decoder.

2. Computer-implemented method according to claim 1, the method providing a pixel-wise classification step comprising the following operations:
- receiving at least one RGB digital gonioscopic image and executing a data pre-processing step on said RGB digital gonioscopic image, said data pre-processing step comprising at least a data range scaling to the [0, 1] values range of each channel R-G-B of each pixel of said RGB digital gonioscopic image;
- providing said scaled RGB digital gonioscopic image as the input of said DNN after said DNN has been trained;
- processing said scaled RGB digital gonioscopic images through said trained DNN to obtain both semantic activation maps and ROI activation maps, with the possibility of using a Monte Carlo dropout approach to process said image multiple times and to obtain several, different semantic activation maps and ROI activation maps for each of said images, by randomly varying the structure of the neural network;
- receiving pixel activations from said multiple semantic activation maps output by said trained DNN for the pixels belonging to said RGB digital gonioscopic image, and computing both the classification of said pixels based on per-pixel average semantic activations and the classification uncertainty of said pixels based on semantic activations variance, and, optionally, determining a pixel representation of at least one of said layers based on said classified pixels;
- receiving pixel activations from said multiple ROI activation maps output by said trained DNN for the pixels belonging to said RGB digital gonioscopic image, and returning an average ROI activation map by computing the average per-pixel ROI activation values;
- combining said pixel-wise classification output with the ROI estimation to provide an accurate segmentation map of irido-corneal angle layers within the most informative region of interest of an input image.

3. Computer-implemented method according to anyone of the preceding claims, wherein said DNN comprising said encoder and said two decoders is configured in such a way that:
- each couple of adjacent levels in the sub-network made up of encoder and semantic decoder is connected through encoding means and through semantic decoding means, defining for said DNN an encoding path and a semantic decoding path;
- each intermediate level is provided with at least an encoder block along said encoding path and at least a decoder block along said semantic decoding path;
- each of said encoding means between a first level and the second level of said pair is configured for downsampling the output feature maps of said first level and each of said semantic decoding means between said second level and said first level of said pair is configured for upsampling the output feature maps of said second level;
- direct connections configured to forward the output feature maps of each level along the encoding path with the same level along the semantic decoding path, wherein said output feature maps are merged with the upsampled output feature maps of the preceding level along the semantic decoding path before being processed by said same level along the semantic decoding path;
- the ROI decoder receiving a hard copy of data representation as input and processes it through a sequence of suitable decoding means, independently from the sequence of decoder and semantic encoder.

4. Computer-implemented method according to claim 3, wherein each of said encoding blocks comprises a dense block followed by a concatenation of its inputs and outputs, and each of said decoding blocks comprises a dense block followed by a convolutional block to perform outputs dimensionality reduction.

5. Computer-implemented method according to claims 3 or 4 wherein each of said dense blocks is a sequence of several convolutional blocks with intermediate concatenations of pairs of output feature maps.

6. Computer-implemented method according to claim 3 or 4 or 5, wherein each of said encoding means comprises a max pooling layer, each of said semantic decoding means comprises a max unpooling layer and each ROI decoder means comprises bilinear interpolation upsampling layer.

7. Computer-implemented method according to anyone of the preceding claims, wherein said DNN sub-network, the sequence of encoder and semantic decoder define a fully-convolutional, symmetric, deep neural network.

8. Computer-implemented method according to anyone of the preceding claims, wherein said data pre-processing step comprises, before said data range scaling phase, the rotation of said RGB digital gonioscopic images in such a way that each one of said RGB digital gonioscopic images shows the angle layers with the same orientation with respect to the other RGB digital gonioscopic images and further, said data pre-processing step comprises, after said data range scaling phase, a data augmentation phase comprising, in combination or alternatively for each of said RGB digital gonioscopic image, a small rotation about an angle comprised between -45 and 45 degrees, a vertical shifting between -50% and 50% of the height of the image and/or a horizontal shifting between -50% and 50% of the width, a zoom with magnification between -0.3 and 0.3, a shear between -20 to 20 degrees along each axis, a horizontal flip, an uniform or non-uniform lightness variation, an uniform or non-uniform sharpness variation and/or a noise injection.

9. Computer-implemented method according to anyone of the preceding claims, wherein said irido-corneal interface layers represented in said RGB digital gonioscopic images are defined by every possible combination of the following anatomical regions: the iris root, the ciliary body band, the scleral spur, the pigmented trabecular meshwork, the non-pigmented trabecular meshwork, the Schwalbe's line and the cornea, wherein each one of said RGB digital gonioscopic images comprises pixels considered not belonging to anyone of said layers (i.e. un-annotated pixels).

10. Computer-implemented method according to anyone of the preceding claims, wherein said training set is made up of the following:
- between 40% and 80%, preferably about 50%, a first group of RGB digital gonioscopic images representing open angle/healthy cases RGB digital gonioscopic images, wherein about 50% of the RGB digital gonioscopic images of said first group belongs to a first sub-group representing dark iris and about 50% of the RGB digital gonioscopic images of said first group belongs to a second sub-group representing light iris, wherein each one of said first sub-group and said second sub-group comprises about 50% of its images representing high pigmented trabecular meshwork and about 50% of its images representing slightly pigmented trabecular meshwork;
- between 20% and 60%, preferably about 50%, a second group of RGB digital gonioscopic images representing pathological images, wherein between 30% and 50%, preferably about 40%, of said RGB digital gonioscopic images belonging to said second group represents closed angles, between 30% and 50%, preferably about 40%, represents synechiae and the remaining images of such second group of RGB digital gonioscopic images represent images where implants or post-surgical intervention injuries are present.

11. Computer-implemented method according to anyone of the preceding claims, wherein said DNN provides interpretable segmentation map of irido-corneal angle layers through a Monte Carlo dropout approach to process an input image multiple times, thus returning multiple semantic activation maps, and generates a more stable final segmentation map, by averaging said multiple semantic activation maps, and a pixel-wise estimation of said average segmentation map uncertainty, by computing the per-pixel variance of said multiple semantic activation maps.

12. A computer system adapted to execute a deep learning semantic segmentation of RGB digital gonioscopic images representing the irido-corneal interface layers comprising:
- a computer readable storage medium having a computer readable program code embodied therewith;
- at least one processor, preferably a microprocessor, coupled to the computer readable storage medium, when executing the computer readable program code, the at least one processor being configured to perform the steps of the method according to anyone of claims 1 - 11.

13. Computer program product comprising software code portions which, when the program is executed by a computer, cause the computer to carry out the steps of the method according to anyone of claims 1 - 11.

## Patentansprüche

1. Computerimplementiertes Verfahren zum Ausführen einer semantischen Deep-Learning-Segmentierung von digitalen gonioskopischen RGB-Bildern, die die iridokornealen Grenzflächenschichten darstellen, wobei das Verfahren einen Trainingsschritt vorsieht, der die folgenden Phasen umfasst:
- Empfangen eines Trainingssatzes, der eine Vielzahl der besagten digitalen gonioskopischen RGB-Bilder umfasst, und Ausführen eines Datenvorverarbeitungsschritts an den besagten digitalen gonioskopischen RGB-Bildern, wobei der besagte Datenvorverarbeitungsschritt mindestens eine Datenbereichsskalierung auf den Wertebereich [0, 1] jedes Kanals R-G-B jedes Pixels der besagten digitalen gonioskopischen RGB-Bilder umfasst;
- Empfangen, für jedes der besagten digitalen gonioskopischen RGB-Bilder des besagten Trainingssatzes, einer Anzahl von Datenkarten, die gleich der Anzahl der besagten Schichten ist, wobei jede Datenkarte die Pixel jedes digitalen gonioskopischen RGB-Bildes, die als zu einer der besagten Schichten gehörig gekennzeichnet sind, darstellt, wobei die Pixel des besagten digitalen gonioskopischen RGB-Bildes, die nicht als zu einer der besagten Schichten gehörig betrachtet werden, als nicht gekennzeichnete Pixel definiert werden, die zu einer nicht annotierten Region gehören;
- Erzeugen einer zusätzlichen Datenkarte, die durch Verarbeiten der Schichtdatenkarten eine Schätzung des lokalen Bildinformationsgehalts darstellt;
- Vorsehen jedes skalierten digitalen gonioskopischen RGB-Bildes des Trainingssatzes und der zugehörigen Datenkarten als Eingabe eines tiefen neuronalen Netzes (DNN), das einen Encoder und zwei Decoder umfasst, die eine Vielzahl von Ebenen umfassen, wobei das besagte DNN so konfiguriert ist, dass es Folgendes vorsieht: pixelweise semantische Aktivierungskarten zum Durchführen einer semantischen Segmentierung der besagten Schichten durch einen ersten semantischen Decoder und eine pixelweise Aktivierungskarte zum Lokalisieren einer Region von Interesse (ROI) in den besagten Trainingsbildern durch Auswerten des lokalen Bildinformationsgehalts, vorzugsweise Helligkeit und Schärfe, durch einen zweiten ROI-Decoder, wobei der besagte zweite ROI-Decoder auf einem vom besagten Encoder ausgegebenen Ausdruck der Datendarstellung arbeitet;
- Verarbeiten jedes der besagten skalierten digitalen gonioskopischen RGB-Bilder durch das besagte DNN und Trainieren des besagten DNN durch einen gleichzeitigen und unabhängigen Minimierungsprozess mit zwei Verlusten:
- einen ersten gewichteten Verlust zum Optimieren der Gewichte des Teilnetzes, das durch die Sequenz von Encoder und semantischem Decoder gebildet wird, indem jedem der Pixel in den besagten digitalen gonioskopischen RGB-Bildern entweder ein anderes Gewicht als 0 zugewiesen wird, wenn es zu einer der besagten Schichten gehört, oder ein Gewicht gleich 0, wenn es zur nicht annotierten Region gehört, wobei das besagte Teilnetz während des besagten Trainingsschritts für jedes digitale gonioskopische RGB-Bild des Trainingssatzes unempfindlich gegenüber der nicht annotierten Region wird;
- einen zweiten Verlust zum Optimieren nur der Gewichte des ROI-Decoders.

2. Computerimplementiertes Verfahren nach Patentanspruch 1, wobei das Verfahren einen pixelweisen Klassifizierungsschritt vorsieht, der die folgenden Vorgänge umfasst:
- Empfangen mindestens eines digitalen gonioskopischen RGB-Bildes und Ausführen eines Datenvorverarbeitungsschrittes am besagten digitalen gonioskopischen RGB-Bild, wobei der besagte Datenvorverarbeitungsschritt mindestens eine Datenbereichsskalierung auf den Wertebereich [0, 1] jedes Kanals R-G-B jedes Pixels des besagten digitalen gonioskopischen RGB-Bildes umfasst;
- Vorsehen des besagten skalierten digitalen gonioskopischen RGB-Bildes als Eingabe des besagten DNN, nachdem das besagte DNN trainiert wurde;
- Verarbeiten der besagten skalierten digitalen gonioskopischen RGB-Bilder durch das besagte trainierte DNN, um sowohl semantische Aktivierungskarten als auch ROI-Aktivierungskarten zu erhalten, mit der Möglichkeit, einen Monte Carlo-Ausfallsansatz zu verwenden, um das besagte Bild mehrmals zu verarbeiten und einige unterschiedliche semantische Aktivierungskarten und ROI-Aktivierungskarten für jedes der besagten Bilder zu erhalten, indem die Struktur des neuronalen Netzes "random" variiert wird;
- Empfangen von Pixelaktivierungen von den besagten mehreren semantischen Aktivierungskarten, die vom besagten trainierten DNN für die Pixel, die zum besagten digitalen gonioskopischen RGB-Bild gehören, ausgegeben werden, und Berechnen sowohl der Klassifizierung der besagten Pixel basierend auf den durchschnittlichen semantischen Aktivierungen pro Pixel als auch der Klassifizierungsunsicherheit der besagten Pixel basierend auf der Varianz der semantischen Aktivierungen, und wahlweises Bestimmen einer Pixeldarstellung von mindestens einer der besagten Schichten basierend auf den besagten klassifizierten Pixeln;
- Empfangen von Pixelaktivierungen von den besagten mehreren ROI-Aktivierungskarten, die vom besagten trainierten DNN für die Pixel, die zum besagten digitalen gonioskopischen RGB-Bild gehören, ausgegeben werden, und Zurückgeben einer durchschnittlichen ROI-Aktivierungskarte durch Berechnen der durchschnittlichen ROI-Aktivierungswerte pro Pixel;
- Kombinieren der besagten pixelweisen Klassifizierungsausgabe mit der ROI-Schätzung, um eine genaue Segmentierungskarte der iridokornealen Winkelschichten innerhalb der informativsten Region von Interesse eines Eingabebildes bereitzustellen.

3. Computerimplementiertes Verfahren nach jeglichem der vorhergehenden Patentansprüche, wobei das besagte DNN, das den besagten Encoder und die besagten beiden Decoder umfasst, so konfiguriert ist, dass:
- jedes Paar benachbarter Ebenen im Teilnetz, das aus einem Encoder und einem semantischen Decoder besteht, durch Codiermittel und durch semantische Decodiermittel verbunden ist, um für das besagte DNN einen Codierpfad und einen semantischen Decodierpfad zu definieren;
- jede Zwischenebene mit mindestens einem Encoderblock entlang des besagten Codierpfads und mindestens einem Decoderblock entlang des besagten semantischen Decodierpfads versehen ist;
- jedes der besagten Codiermittel zwischen einer ersten Ebene und der zweiten Ebene des besagten Paares zum Downsampling der Ausgabemerkmalskarten der besagten ersten Ebene konfiguriert ist und jedes der besagten semantischen Decodiermittel zwischen der besagten zweiten Ebene und der besagten ersten Ebene des besagten Paares zum Upsampling der Ausgabemerkmalskarten der besagten zweiten Ebene konfiguriert ist;
- direkte Verbindungen vorhanden sind, die so konfiguriert sind, dass sie die Ausgabemerkmalskarten jeder Ebene entlang des Codierpfads an die gleiche Ebene entlang des semantischen Decodierpfads weiterleiten, wobei die besagten Ausgabemerkmalskarten mit den upgesampelten Ausgabemerkmalskarten der vorangehenden Ebene entlang des semantischen Decodierpfads zusammengeführt werden, bevor sie von der besagten gleichen Ebene entlang des semantischen Decodierpfads verarbeitet werden;
- der ROI-Decoder einen Ausdruck der Datendarstellung als Eingabe empfängt und sie durch eine Sequenz geeigneter Decodiermittel unabhängig von der Sequenz von Decoder und semantischem Encoder verarbeitet.

4. Computerimplementiertes Verfahren nach Patentanspruch 3, wobei jeder der besagten Codierblöcke einen dichten Block gefolgt von einer Verkettung seiner Eingaben und Ausgaben umfasst und jeder der besagten Decodierblöcke einen dichten Block gefolgt von einem Faltungsblock umfasst, um eine Dimensionsreduktion der Ausgaben durchzuführen.

5. Computerimplementiertes Verfahren nach Patentanspruch 3 oder 4, wobei jeder der besagten dichten Blöcke eine Sequenz von einigen Faltungsblöcken mit dazwischenliegenden Verkettungen von Paaren von Ausgabemerkmalskarten ist.

6. Computerimplementiertes Verfahren nach Patentanspruch 3 oder 4 oder 5, wobei jedes der besagten Codiermittel eine Max-Pooling-Schicht umfasst, jedes der besagten semantischen Decodiermittel eine Max-Unpooling-Schicht umfasst und jedes ROI-Decodiermittel eine bilineare Upsampling- und Interpolationsschicht umfasst.

7. Computerimplementiertes Verfahren nach jeglichem der vorangehenden Patentansprüche, wobei das besagte DNN-Teilnetz, die Sequenz von Encoder und semantischem Decoder ein vollständig faltendes, symmetrisches, tiefes neuronales Netz definieren.

8. Computerimplementiertes Verfahren nach jeglichem der vorhergehenden Patentansprüche, wobei der besagte Datenvorverarbeitungsschritt vor der besagten Datenbereichsskalierungsphase die Drehung der besagten digitalen gonioskopischen RGB-Bilder in einer solchen Weise umfasst, dass jedes der besagten digitalen gonioskopischen RGB-Bilder die Winkelschichten mit der gleichen Orientierung in Bezug auf die anderen digitalen gonioskopischen RGB-Bilder zeigt, und wobei ferner der besagte Datenvorverarbeitungsschritt nach der besagten Datenbereichsskalierungsphase eine Datenvergrößerungsphase umfasst, die in Kombination oder alternativ für jedes der besagten digitalen gonioskopischen RGB-Bilder Folgendes umfasst: eine kleine Drehung um einen Winkel zwischen -45 und 45 Grad, eine vertikale Verschiebung zwischen -50% und 50% der Höhe des Bildes und/oder eine horizontale Verschiebung zwischen -50% und 50% der Breite, einen Zoom mit einer Vergrößerung zwischen -0,3 und 0,3, eine Scherung zwischen -20 und 20 Grad entlang jeder Achse, eine horizontale Spiegelung, eine gleichmäßige oder ungleichmäßige Veränderung der Helligkeit, eine gleichmäßige oder ungleichmäßige Veränderung der Schärfe und/oder eine Rauschinjektion.

9. Computerimplementiertes Verfahren nach jeglichem der vorhergehenden Patentansprüche, wobei die besagten iridokornealen Grenzflächenschichten, die in den besagten digitalen gonioskopischen RGB-Bildern dargestellt sind, durch jede mögliche Kombination der folgenden anatomischen Bereiche definiert sind: die Iriswurzel, das Ziliarkörperband, den Sklerasporn, das pigmentierte trabekuläre Maschenwerk, das nicht pigmentierte trabekuläre Maschenwerk, die Schwalbe-Linie und die Hornhaut, wobei jedes der besagten digitalen gonioskopischen RGB-Bilder Pixel umfasst, die als zu keiner der besagten Schichten gehörend betrachtet werden (d. h. nicht annotierte Pixel).

10. Computerimplementiertes Verfahren nach jeglichem der vorhergehenden Patentansprüche, wobei der besagte Trainingssatz aus Folgendem besteht:
- zwischen 40% und 80%, vorzugsweise etwa 50%, aus einer ersten Gruppe von digitalen gonioskopischen RGB-Bildern, die Fälle mit einem offenen/gesunden Winkel darstellen, wobei etwa 50% der digitalen gonioskopischen RGB-Bilder der besagten ersten Gruppe zu einer ersten Untergruppe gehören, die die dunklen Iriden darstellt, und etwa 50% der digitalen gonioskopischen RGB-Bilder der besagten ersten Gruppe zu einer zweiten Untergruppe gehören, die die hellen Iriden darstellt, wobei jede der besagten ersten und zweiten Untergruppe Folgendes umfasst: etwa 50% ihrer Bilder, die ein stark pigmentiertes trabekuläres Maschenwerk darstellen, und etwa 50% ihrer Bilder, die ein schwach pigmentiertes trabekuläres Maschenwerk darstellen;
- zwischen 20% und 60%, vorzugsweise etwa 50%, aus einer zweiten Gruppe von digitalen gonioskopischen RGB-Bildern, die pathologische Bilder darstellen, wobei zwischen 30% und 50%, vorzugsweise etwa 40%, der besagten digitalen gonioskopischen RGB-Bilder, die zur besagten zweiten Gruppe gehören, geschlossene Winkel darstellen, zwischen 30% und 50%, vorzugsweise etwa 40%, Synechien darstellen und die verbleibenden Bilder der besagten zweiten Gruppe von digitalen gonioskopischen RGB-Bildern Bilder darstellen, in denen Implantate oder Verletzungen nach einem chirurgischen Eingriff vorhanden sind.

11. Computerimplementiertes Verfahren nach jeglichem der vorhergehenden Patentansprüche, wobei das besagte DNN eine interpretierbare Segmentierungskarte von iridokornealen Winkelschichten durch einen Monte Carlo-Ausfallansatz bereitstellt, um ein Eingabebild mehrmals zu verarbeiten, wodurch mehrere semantische Aktivierungskarten zurückgegeben werden, und Folgendes erzeugt: eine stabilere endgültige Segmentierungskarte, indem die besagten mehreren semantischen Aktivierungskarten gemittelt werden, und eine pixelweise Schätzung der besagten durchschnittlichen Segmentierungskartenunsicherheit, indem die Varianz pro Pixel der besagten mehreren semantischen Aktivierungskarten berechnet wird.

12. Computersystem, das dazu geeignet ist, eine semantische Deep-Learning-Segmentierung von digitalen gonioskopischen RGB-Bildern, die die iridokornealen Grenzflächenschichten darstellen, auszuführen, wobei es Folgendes umfasst:
- ein computerlesbares Speichermedium mit einem darin eingebetteten computerlesbaren Programmcode;
- mindestens einen Prozessor, vorzugsweise einen Mikroprozessor, der mit dem computerlesbaren Speichermedium gekoppelt ist, wobei, während der computerlesbare Programmcode ausgeführt wird, der mindestens eine Prozessor so konfiguriert ist, dass er die Schritte des Verfahrens nach jeglichem der Patentansprüche 1 bis 11 durchführt.

13. Computerprogrammprodukt, das Softwarecodeabschnitte umfasst, die, wenn das Programm von einem Computer ausgeführt wird, den Computer dazu veranlassen, die Schritte des Verfahrens nach jeglichem der Patentansprüche 1 bis 11 auszuführen.

## Revendications

1. Procédé mis en œuvre par ordinateur pour exécuter une segmentation sémantique par apprentissage profond d'images gonioscopiques numériques RGB représentant les couches de l'interface irido-cornéenne, le procédé prévoyant une étape d'entraînement comprenant les phases suivantes:
- recevoir un ensemble d'entraînement comprenant une pluralité desdites images gonioscopiques numériques RGB et exécuter une étape de prétraitement des données sur lesdites images gonioscopiques numériques RGB, ladite étape de prétraitement des données comprenant au moins une mise à l'échelle de la plage de valeurs de données dans l'intervalle compris entre [0, 1] pour chaque canal R-G-B de chaque pixel desdites images gonioscopiques numériques RGB;
- recevoir, pour chacune desdites images gonioscopiques numériques RGB dudit ensemble d'entraînement, un nombre de cartes de données égal au nombre desdites couches, chaque carte de données représentant les pixels de chaque image gonioscopique numérique RGB étiquetée comme appartenant à l'une desdites couches, les pixels de ladite image gonioscopique numérique RGB non considérés comme appartenant à l'une desdites couches étant définis comme des pixels non étiquetés appartenant à une région non annotée;
- générer une carte de données supplémentaire représentant une estimation de l'informativité locale de l'image en traitant les cartes de données des couches;
- fournir chaque image gonioscopique numérique RGB mise à l'échelle de l'ensemble d'entraînement et les cartes de données associées en tant qu'entrée d'un réseau neuronal profond (DNN) comprenant un encodeur et deux décodeurs, comprenant une pluralité de niveaux, ledit DNN étant configuré pour fournir à la fois des cartes d'activation sémantique en termes de pixels pour effectuer une segmentation sémantique desdites couches, par l'intermédiaire d'un premier décodeur sémantique, et une carte d'activation en termes de pixels pour localiser une région d'intérêt (ROI) dans lesdites images d'entraînement en évaluant l'informativité locale de l'image, de préférence la luminosité et la netteté, par l'intermédiaire d'un deuxième décodeur ROI, ledit deuxième décodeur ROI fonctionnant sur une copie papier de la représentation des données produite par ledit encodeur;
- traiter chacune desdites images gonioscopiques numériques RGB mises à l'échelle par l'intermédiaire dudit DNN et entraîner ledit DNN par un processus simultané et indépendant de minimisation des deux pertes:
- une première perte pondérée pour optimiser les poids du sous-réseau constitué par la séquence de l'encodeur et du décodeur sémantique en attribuant à chacun des pixels desdites images gonioscopiques numériques RGB soit un poids différent de 0, s'il appartient à l'une desdites couches, soit un poids égal à 0, s'il appartient à la région non annotée, rendant ledit sous-réseau insensible à la région non annotée pendant ladite étape d'entraînement pour chaque image gonioscopique numérique RGB de l'ensemble d'entraînement;
- une deuxième perte pour optimiser les poids du décodeur ROI uniquement.

2. Procédé mis en œuvre par ordinateur selon la revendication 1, le procédé prévoyant une étape de classification basée sur les pixels comprenant les opérations suivantes:
- recevoir au moins une image gonioscopique numérique RGB et exécuter une étape de prétraitement des données sur ladite image gonioscopique numérique RGB, ladite étape de prétraitement des données comprenant au moins une mise à l'échelle de la plage de valeurs de données dans l'intervalle compris entre [0, 1] pour chaque canal R-G-B de chaque pixel de ladite image gonioscopique numérique RGB;
- fournir ladite image gonioscopique numérique RGB mise à l'échelle en tant qu'entrée dudit DNN après que ledit DNN ait été entraîné;
- traiter lesdites images gonioscopiques numériques RGB mises à l'échelle par l'intermédiaire dudit DNN entraîné afin d'obtenir des cartes d'activation sémantique et des cartes d'activation ROI, avec la possibilité d'utiliser une approche Monte Carlo de l'abandon pour traiter ladite image plusieurs fois et obtenir plusieurs cartes d'activation sémantique et cartes d'activation ROI différentes pour chacune desdites images, en faisant varier de manière aléatoire la structure du réseau neuronal;
- recevoir les activations des pixels à partir desdites cartes d'activation sémantique multiples produites par ledit DNN entraîné pour les pixels appartenant à ladite image gonioscopique numérique RGB, et calculer à la fois la classification desdits pixels sur la base des activations sémantiques moyennes par pixel et l'incertitude de la classification desdits pixels sur la base de la variance des activations sémantiques, et, éventuellement, déterminer une représentation des pixels d'au moins une desdites couches sur la base desdits pixels classifiés;
- recevoir les activations des pixels desdites cartes d'activation ROI multiples produites par ledit DNN entraîné pour les pixels appartenant à ladite image gonioscopique numérique RGB, et renvoyer une carte d'activation ROI moyenne en calculant les valeurs d'activation ROI moyennes par pixel;
- combiner ladite sortie de classification basée sur les pixels avec l'estimation ROI pour fournir une carte de segmentation précise des couches d'angle irido-cornéen dans la région d'intérêt la plus informative d'une image d'entrée.

3. Procédé mis en œuvre par ordinateur selon l'une quelconque des revendications précédentes, où ledit DNN comprenant ledit encodeur et lesdits deux décodeurs est configuré de telle sorte que:
- chaque couple de niveaux adjacents dans le sous-réseau composé d'un encodeur et d'un décodeur sémantique est connecté par des moyens de codage et par des moyens de décodage sémantique, définissant pour ledit DNN une voie de codage et une voie de décodage sémantique;
- chaque niveau intermédiaire est doté d'au moins un bloc d'encodage le long de ladite voie d'encodage et d'au moins un bloc de décodage le long de ladite voie de décodage sémantique;
- chacun desdits moyens d'encodage entre un premier niveau et le deuxième niveau de ladite paire est configuré pour sous-échantillonner les cartes de caractéristiques de sortie dudit premier niveau et chacun desdits moyens de décodage sémantique entre ledit deuxième niveau et ledit premier niveau de ladite paire est configuré pour suréchantillonner les cartes de caractéristiques de sortie dudit deuxième niveau;
- des connexions directes configurées pour transmettre les cartes de caractéristiques de sortie de chaque niveau le long de la voie d'encodage au même niveau le long de la voie de décodage sémantique, où lesdites cartes de caractéristiques de sortie sont fusionnées avec les cartes de caractéristiques de sortie suréchantillonnées du niveau précédent le long de la voie de décodage sémantique avant d'être traitées par ledit même niveau le long de la voie de décodage sémantique;
- le décodeur ROI reçoit en entrée une copie papier de la représentation des données et la traite par une séquence de moyens de décodage appropriés, indépendamment de la séquence du décodeur et de l'encodeur sémantique.

4. Procédé mis en œuvre par ordinateur selon la revendication 3, où chacun desdits blocs d'encodage comprend un bloc dense suivi d'une concaténation de ses entrées et sorties, et chacun desdits blocs de décodage comprend un bloc dense suivi d'un bloc convolutif pour effectuer une réduction de la dimensionnalité des sorties.

5. Procédé mis en œuvre par ordinateur selon les revendications 3 ou 4, où chacun desdits blocs denses est une séquence de plusieurs blocs convolutifs avec des concaténations intermédiaires de paires de cartes de caractéristiques de sortie.

6. Procédé mis en œuvre par ordinateur selon la revendication 3 ou 4 ou 5, où chacun desdits moyens d'encodage comprend une couche de max-pooling, chacun desdits moyens de décodage sémantique comprend une couche de max-unpooling et chaque moyen de décodage ROI comprend une couche de suréchantillonnage par interpolation bilinéaire.

7. Procédé mis en œuvre par ordinateur selon l'une quelconques des revendications précédentes, où ledit sous-réseau DNN, la séquence de l'encodeur et du décodeur sémantique définissent un réseau neuronal profond, symétrique et entièrement convolutif.

8. Procédé mis en œuvre par ordinateur selon l'une quelconque des revendications précédentes, où ladite étape de prétraitement des données comprend, avant ladite phase de mise à l'échelle de la plage de données, la rotation desdites images gonioscopiques numériques RGB de manière à ce que chacune desdites images gonioscopiques numériques RGB montre les couches d'angle avec la même orientation par rapport aux autres images gonioscopiques numériques RGB, et en outre, ladite étape de prétraitement des données comprend, après ladite phase de mise à l'échelle de la plage de données, une phase d'augmentation des données comprenant, en combinaison ou alternativement pour chacune desdites images gonioscopiques numériques RGB, une petite rotation autour d'un angle compris entre -45 et 45 degrés, un décalage vertical entre -50% et 50% de la hauteur de l'image et/ou un décalage horizontal entre -50% et 50% de la largeur, un zoom avec un agrandissement compris entre -0,3 et 0,3, un cisaillement entre -20 et 20 degrés le long de chaque axe, un retournement horizontal, une variation uniforme ou non uniforme de la luminosité, une variation uniforme ou non uniforme de la netteté et/ou une injection de bruit.

9. Procédé mis en œuvre par ordinateur selon l'une quelconque des revendications précédentes, où lesdites couches de l'interface irido-cornéenne représentées dans lesdites images gonioscopiques numériques RGB sont définies par toutes les combinaisons possibles des régions anatomiques suivantes: la racine de l'iris, la bande du corps ciliaire, l'éperon scléral, le réseau trabéculaire pigmenté, le réseau trabéculaire non pigmenté, la ligne de Schwalbe et la cornée, dans laquelle chacune desdites images gonioscopiques numériques RGB comprend des pixels considérés comme n'appartenant à aucune desdites couches (c'est-à-dire des pixels non annotés).

10. Procédé mis en œuvre par ordinateur selon l'une quelconque des revendications précédentes, où ledit ensemble d'entraînement est constitué des éléments suivants:
- entre 40% et 80%, de préférence environ 50%, un premier groupe d'images gonioscopiques numériques RGB représentant des images gonioscopiques numériques RGB à angle ouvert/cas sains, où environ 50% des images gonioscopiques numériques RGB dudit premier groupe appartiennent à un premier sous-groupe représentant l'iris foncé et environ 50% des images gonioscopiques numériques RGB dudit premier groupe appartiennent à un deuxième sous-groupe représentant l'iris clair, où chacun dudit premier sous-groupe et dudit deuxième sous-groupe comprend environ 50% de ses images représentant un réseau trabéculaire fortement pigmenté et environ 50% de ses images représentant un réseau trabéculaire faiblement pigmenté,
- entre 20% et 60%, de préférence environ 50%, un deuxième groupe d'images gonioscopiques numériques RGB représentant des images pathologiques, où entre 30% et 50%, de préférence environ 40%, desdites images gonioscopiques numériques RGB appartenant audit deuxième groupe représentent des angles fermés, entre 30% et 50%, de préférence environ 40%, représentent des synéchies et les images restantes de ce deuxième groupe d'images gonioscopiques numériques RGB représentent des images où des implants ou des lésions post-chirurgicales sont présents.

11. Procédé mis en œuvre par ordinateur selon l'une quelconque des revendications précédentes, où ledit DNN fournit une carte de segmentation interprétable des couches d'angle irido-cornéen par le biais d'une approche Monte Carlo de l'abandon pour traiter une image d'entrée plusieurs fois, renvoyant ainsi plusieurs cartes d'activation sémantique, et génère une carte de segmentation finale plus stable, en faisant la moyenne desdites cartes d'activation sémantique multiples, et une estimation basée sur les pixels de ladite incertitude de la carte de segmentation moyenne, en calculant la variance par pixel desdites cartes d'activation sémantique multiples.

12. Système informatique adapté à l'exécution d'une segmentation sémantique par apprentissage profond d'images gonioscopiques numériques RGB représentant les couches de l'interface irido-cornéenne, comprenant:
- un support de stockage lisible par ordinateur sur lequel est incorporé un code de programme lisible par ordinateur,
- au moins un processeur, de préférence un microprocesseur, relié au support de stockage lisible par ordinateur, lors de l'exécution du code de programme lisible par ordinateur, le au moins un processeur étant configuré pour exécuter les étapes du procédé selon l'une quelconque des revendications 1 à 11.

13. Produit de programme d'ordinateur comprenant des portions de code logiciel qui, lorsque le programme est exécuté par un ordinateur, amènent l'ordinateur à exécuter les étapes du procédé selon l'une quelconque des revendications 1 à 11.
